# EUROPEAN PATENT APPLICATION

(11) **EP 1 770 981 A1**
(43) Date of publication of application: **04.04.2007**
(21) Application number: 06254970.4
(22) Date of filing: 26.09.2006
(51) Int. Cl.: H04N 1/32, G06F 17/30

(54) **Data transmission system, data transmission method, data transmission apparatus, and computer usable medium therefor**

(30) Priority: 28.09.2005 JP 2005282835
(71) Applicant: Brother Kogyo Kabushiki Kaisha, Nagoya-shi, Aichi-ken 467-8561 (JP)
(72) Inventor: Kawai, Sunao, c/o Brother Kogyo K.K., Nagoya-shi, Aichi-ken 467-8562 (JP)
(74) Representative: Smith, Samuel Leonard

(57) **Abstract**

A data transmission system having a server and a search criterion setting system is further provided with a preliminary search system, a preliminary obtaining system, an entry information notifying system, a search criterion storing system, a substantial search system, a substantial obtaining system, an extracting system, and a data transmitting system.

## Description

### Cross Reference to Related Application

This application claims priority from Japanese Patent Application No.2005-282835, filed on September 28, 2005, the entire subject matter of which is incorporated herein by reference.

### Background

### Technical Field

Aspects of the present invention relate to a data transmission system, data transmission method, data transmission device and program therefor.

### Related Art

Conventionally, a facsimile machine that transmits and receives data representing an image by communicating with an external device is known. Further, an MFP (multiple function peripheral) having a plurality of functions, such as a function for printing to output data obtained from the external device, a function for copying to scan documents to generate image data and to output images based on the scanned image data, and a facsimile function to communicate with other facsimile devices is known.

In many cases, such an MFP and a facsimile machine are provided with a storage unit to store information regarding a destination of data transmission so that the destination is called up by an operation to a predetermined button to transmit the data to the destination. In other cases, a server connected with a network is provided with a storage unit to store the destination information so that the MFP and the facsimile machine connected with the same network can obtain the destination information from the server to transmit the image data to the other external device.

As an example of such a device, i.e., an image forming apparatus, employing the service to obtain the destination information from an information administrating server such as an LDAP server is disclosed in Japanese Patent Provisional Publication No. P2004-274486A.

In the above-referenced publication, however, a process to follow when a desired destination information is not successfully obtained is not disclosed. Further, in the image forming apparatus, a configuration of the information administrating server is not verified when a new MFP and a facsimile machine are added in the network or when the information administrating server is replaced with another. Therefore, it has been a problem that the desired destination information cannot be obtained when the image data is attempted to be transmitted.

### Summary of the Invention

Aspects of the present invention are advantageous in that a data transmission system, a data transmission method, a data transmission apparatus, and a computer usable medium therefore, wherein the data transmission apparatus can obtain desired destination information from the information administrating server (a directory server) upon data transmission, are provided.

The following describes general aspects of the invention that may or may not be included in various examples and modifications. It should be noted that various connections are set forth between elements in the following description. It should be noted that these connections in general and, unless specified otherwise, may be direct or indirect and that this specification is not intended to be limiting in this respect.

According to some aspects of the invention, there is provided a data transmission system comprising a server to store information including entry information, a search criterion setting system, wherein a search criterion to search for the entry information stored in the server is set according to an instruction from an input unit, a preliminary search system, which searches for the entry information in the server based on the search criterion set in the search criterion setting system, a preliminary obtaining system, which obtains a piece of the entry information searched for by the preliminary search system that meets the search criterion from the server, an entry information notifying system, which notifies a user of the data transmission system of the piece of the entry information obtained by the preliminary obtaining system through a notifying unit, a search criterion storing system, wherein the search criterion set in the search criterion setting system is stored, a substantial search system, which searches for the entry information in the server based on the search criterion stored in the search criterion storing system according to the instruction from the input unit, a substantial obtaining system, which obtains a piece of the entry information searched for by the substantial search system that meets the search criterion from the server, an extracting system, wherein destination information indicating a destination of data transmission is extracted from the piece of the entry information obtained by the substantial obtaining system, and a data transmitting system, which transmits data to the destination according to the destination information extracted in the extracting system.

According to the above configuration, the user can confirm connection in the data transmission system is established to examine as to whether the entry information stored in the server can be used for the data transmission. Further, the entry information stored in the server can be searched for by the substantial search system based on the search criterion stored in the search criterion storing system so that the entry information that meets the search criterion can be obtained. Furthermore, the destination information is extracted from the entry information obtained by the substantial search system, and the data can be sent to the destination included in the destination information by the data transmitting system. Thus, the user can confirm as to whether the entry information stored in the server is available so that the data can be transmitted to a desired destination based on the entry information stored in the server by using the preliminary obtaining system, the substantial obtaining system, the extracting system, and the data transmitting system. For example, when additional devices such as an MFP and a facsimile machine is added to the data transmission system, or when the server is replaced with another, connection in the data transmission system with the newly added device can be examined preliminarily.

Optionally, the piece of the entry information obtained by the preliminary obtaining system may be notified to the user in an unrecognizable format so that a part of the obtained piece of the entry information is unrecognizable to the user.

According to the above configuration, information included in the entry information that should not be known to every user can be prevented from being undesirably viewed so that confirmation of connection within the data transmission system is securely conducted.

Optionally, the entry information notifying system may notify the user of a plurality of pieces of the entry information.

According to the above configuration, the user can confirm the plurality of pieces of the entry information that meets the search criteria. Thus, the user can recognize as to whether the desired entry information was found incidentally or necessarily based on the search criterion.

Optionally, the entry information notifying system may randomly select a piece of the entry information and notify the user of the selected piece of the entry information.

According to the above configuration, it can be prevented that a certain piece of the entry information is always notified and the certain piece of the entry information is undesirably known to numbers of users.

Optionally, the entry information notifying system may notify the user of a plurality of pieces of the entry information by displaying the plurality of pieces of the entry information in one screen of a display unit of the notifying unit.

According to the above configuration, the user can recognize as to whether the desired entry information was found incidentally or necessarily based on the search criterion. It should be noted that the plurality of pieces of the entry information are displayed in one screen so that the user can easily recognize the search result therein.

Optionally, the entry information notifying system may notify the user of the entry information by displaying a piece of the entry information and another piece of the entry information which is displayed according to an instruction from the input unit.

According to the above configuration, the user can recognize as to whether the desired entry information was found incidentally or necessarily based on the search criterion.

Optionally, the entry information notifying system may notify the user of a piece of the entry information having attributes specified in the search criterion as well as the other attributes composing the entry information that are not specified in the search criterion.

According to the above configuration, the user can recognize as to whether the desired entry information was found incidentally or necessarily based on the attributes set in the search criterion.

Optionally, the entry information notifying system may notify the user of a piece of the entry information having attributes specified in the search criterion by displaying the attributes that meet the search criterion set in the search criterion setting system to be distinguished from the other attributes composing the entry information that are not specified in the search criterion.

According to the above configuration, the attributes as a search result that meet the search criterion can be easily recognized by the user.

Optionally, the entry information may be stored in a directory configured in a tree structure in the server, and the entry information notifying system may notify the user of the directory storing the entry information searched for in accordance with the search criterion set in the search criterion setting system.

According to the above configuration, the entry information notifying system notifies the user of the directory that stores the searched entry information. Thus, the user can recognize as to whether the desired entry information was found incidentally or necessarily based on the attributes set in the search criterion.

According to another aspects of the invention, there is provided a method for data transmission, comprising setting a search criterion to search for entry information including destination information regarding a destination of the data transmission stored in a server according to an instruction from an input unit, searching preliminarily the server for the entry information based on the set search criterion, obtaining preliminarily a piece of the entry information searched by the preliminary search that meets the search criterion from the server; notifying a user of a notifying unit of the piece of the entry information obtained in the preliminary obtainment through the notifying unit, storing the set search criterion in a search criterion storing system, searching substantially the entry information from the server based on the search criterion stored in the search criterion storing system, obtaining substantially a piece of the entry information searched for by the substantial search that meets the search criterion from the server, extracting the destination information from the piece of the entry information obtained by the substantial obtainment, and transmitting data to the destination according to the destination information extracted from the piece of the entry information.

According to the above method, the user can confirm connection in a data transmission system is established to examine as to whether the entry information stored in the server can be used for the data transmission. Further, the entry information stored in the server can be searched for by the substantial search based on the search criterion stored in the search criterion storing system so that the entry information that meets the search criterion can be obtained. Furthermore, the destination information is extracted from the entry information obtained by the substantial search, and the data can be sent to the destination included in the destination information. Thus, the user can confirm as to whether the entry information stored in the server is available so that the data can be transmitted to a desired destination based on the entry information stored in the server.

According to another aspects of the invention, there is provided a computer usable medium comprising computer readable instructions for controlling a computer to execute steps of a search criterion setting step, wherein a search criterion to search for entry information including destination information regarding a destination of the data transmission stored in a server is set according to an instruction from an input unit, a preliminary searching step, wherein the entry information is searched for in the server based on the search criterion set in the search criterion setting step, a preliminary obtaining step, wherein a piece of the entry information searched in the preliminary search step that meets the search criterion is obtained from the server, an entry information notifying step, wherein a user of the computer is notified of the piece of the entry information obtained in the preliminary obtaining step through a notifying unit, a search criterion storing step, wherein the search criterion set in the search criterion setting step is stored, a substantial searching step, wherein the entry information is searched in the server based on the search criterion stored in the search criterion storing step according to the instruction from the input unit, a substantial obtaining step, wherein a piece of the entry information searched for by the substantial search system that meets the search criterion is obtained from the server, an extracting step, wherein the destination information is extracted from the piece of the entry information obtained by the substantial obtaining step, and a data transmission step, wherein data is transmitted to the destination according to the destination information extracted in the extracting system.

According to the above computer usable medium, the user of the computer can confirm the availability of the entry information stored in the server so that the data can be transmitted to a desired destination based on the entry information stored in the server.

According to another aspects of the invention, there is provided a data transmission apparatus, comprising a search criterion setting system, wherein a search criterion to search for entry information stored in a server is set according to an instruction from an input unit, a preliminary search system, which searches for the entry information in the server based on the search criterion set in the search criterion setting system, a preliminary obtaining system, which obtains a piece of the entry information searched by the preliminary search system that meets the search criterion from the server, an entry information notifying system, which notifies a user of the data transmission apparatus of the piece of the entry information obtained by the preliminary obtaining system through a notifying unit, a search criterion storing system, wherein the search criterion set in the search criterion setting system is stored, a substantial search system, which searches for the entry information in the server based on the search criterion stored in the search criterion storing system according to the instruction from the input unit, a substantial obtaining system, which obtains a piece of the entry information searched for by the substantial search system that meets the search criterion from the server, an extracting system, wherein destination information indicating a destination of data transmission is extracted from the piece of the entry information obtained by the substantial obtaining system, and a data transmitting system, which transmits data to the destination according to the destination information extracted in the extracting system.

According to the above configuration, the user of the data transmission apparatus can confirm the availability of the entry information stored in the server so that the data can be transmitted to a desired destination based on the entry information stored in the server.

According to another aspects of the invention, there is provided a data transmission system comprising a server to store information including entry information a search criterion setting system, wherein a search criterion to search for the entry information stored in the server is set according to an instruction from an input unit, a preliminary search system, which searches for the entry information in the server based on the search criterion set in the search criterion setting system, a preliminary obtaining system, which obtains a piece of the entry information searched for by the preliminary search system that meets the search criterion from the server, an obtainment result notifying system, which notifies a user of the data transmission system of as to whether the piece of the entry information is obtained by the preliminary obtaining system through a notifying unit, a search criterion storing system, wherein the search criterion set in the search criterion setting system is stored, a substantial search system, which searches for the entry information in the server based on the search criterion stored in the search criterion storing system according to the instruction from the input unit, a substantial obtaining system, which obtains a piece of the entry information searched for by the substantial search system that meets the search criterion from the server, an extracting system, wherein destination information indicating a destination of data transmission is extracted from the piece of the entry information obtained by the substantial obtaining system, and a data transmitting system, which transmits data to the destination according to the destination information extracted in the extracting system.

According to the above configuration, the user can confirm connection in the data transmission system is established to examine as to whether the entry information stored in the server can be used for the data transmission. Further, the entry information stored in the server can be searched for by the substantial search system based on the search criterion stored in the search criterion storing system so that the entry information that meets the search criterion can be obtained. Furthermore, the destination information is extracted from the entry information obtained by the substantial search system, and the data can be sent to the destination included in the destination information by the data transmitting system. Thus, the user can confirm as to whether the entry information stored in the server is available so that the data can be transmitted to a desired destination based on the entry information stored in the server by using the preliminary obtaining system, the substantial obtaining system, the extracting system, and the data transmitting system.

According to another aspects of the invention, there is provided a method for data transmission, comprising setting a search criterion to search for entry information including destination information regarding a destination of the data transmission stored in a server according to an instruction from an input unit, searching preliminarily the entry information from the server based on the set search criterion, obtaining preliminarily a piece of the entry information searched for by the preliminary search that meets the search criterion from the server, notifying a user of a notifying unit of as to whether the piece of the entry information is obtained in the preliminary obtainment through the notifying unit, storing the set search criterion in a search criterion storing system, searching substantially the entry information from the server based on the search criterion stored in the search criterion storing system, obtaining substantially a piece of the entry information searched for by the substantial search that meets the search criterion from the server, extracting the destination information from the piece of the entry information obtained by the substantial obtainment, and transmitting data to the destination according to the destination information extracted from the piece of the entry information.

According to the above method, the user can confirm the availability of the entry information stored in the server so that the data can be transmitted to a desired destination based on the entry information stored in the server.

According to another aspects of the invention, there is provided a computer usable medium comprising computer readable instructions for controlling a computer to execute steps of a search criterion setting step, wherein a search criterion to search for entry information including destination information regarding a destination of the data transmission stored in a server is set according to an instruction from an input unit, a preliminary searching step, wherein the entry information is searched in the server based on the search criterion set in the search criterion setting step, a preliminary obtaining step, wherein a piece of the entry information searched for in the preliminary search step that meets the search criterion is obtained from the server, an obtainment result notifying step, wherein a user of the computer is notified of as to whether the piece of the entry information obtained in the preliminary obtaining step through a notifying unit, a search criterion storing step, wherein the search criterion set in the search criterion setting step is stored, a substantial searching step, wherein the entry information is searched for in the server based on the search criterion stored in the search criterion storing step according to the instruction from the input unit, a substantial obtaining step, wherein a piece of the entry information searched for by the substantial search system that meets the search criterion is obtained from the server, an extracting step, wherein the destination information is extracted from the piece of the entry information obtained by the substantial obtaining step, and a data transmission step, wherein data is transmitted to the destination according to the destination information extracted in the extracting system.

According to the above computer usable medium, the user of the computer can confirm the availability of the entry information stored in the server so that the data can be transmitted to a desired destination based on the entry information stored in the server.

According to another aspects of the invention, there is provided a data transmission apparatus, comprising a search criterion setting system, wherein a search criterion to search for entry information stored in a server is set according to an instruction from an input unit, a preliminary search system, which searches for the entry information in the server based on the search criterion set in the search criterion setting system, a preliminary obtaining system, which obtains a piece of the entry information searched for by the preliminary search system that meets the search criterion from the server, an obtainment result notifying system, which notifies a user of the data transmission apparatus of as to whether the piece of the entry information obtained by the preliminary obtaining system through a notifying unit, a search criterion storing system, wherein the search criterion set in the search criterion setting system is stored, a substantial search system, which searches for the entry information in the server based on the search criterion stored in the search criterion storing system according to the instruction from the input unit, a substantial obtaining system, which obtains a piece of the entry information searched for by the substantial search system that meets the search criterion from the server, an extracting system, wherein destination information indicating a destination of data transmission is extracted from the piece of the entry information obtained by the substantial obtaining system, and a data transmitting system, which transmits data to the destination according to the destination information extracted in the extracting system.

According to the above configuration, the user of the data transmission apparatus can confirm the availability of the entry information stored in the server so that the data can be transmitted to a desired destination based on the entry information stored in the server.

### Brief Description of the Accompanying Drawings

Fig. 1 is a schematic diagram showing a configuration of a data transmission system according to an embodiment of the invention.
Fig. 2 is a block diagram showing an electrical configuration of an MFP according to the embodiment of the invention.
Fig. 3 illustrates an operation panel according to the embodiment of the invention.
Fig. 4 is a block diagram showing an electrical configuration of a directory server according to the embodiment of the invention.
Fig. 5 illustrates a hierarchical tree structure in the directory server according to the embodiment of the invention.
Fig. 6 illustrates entry information stored in the directory server according to the embodiment of the invention.
Fig. 7 is a block diagram showing an electrical configuration of a terminal device according to the embodiment of the invention.
Fig. 8 illustrates a connection setting screen to configure the directory server according to the embodiment of the invention.
Fig. 9 is a flowchart showing a connection confirming process according to the embodiment of the invention.
Fig. 10 is a flowchart showing an entry access process according to the embodiment of the invention.
Fig. 11 is a diagram to illustrate the directory server and the MFP obtaining the entry information according to the embodiment of the invention.
Fig. 12 is a flowchart showing a connection test result displaying process according to the embodiment of the invention.
Fig. 13 illustrates a first exemplary screen showing a connection test result according to the embodiment of the invention.
Fig. 14 illustrates a second exemplary screen showing a connection test result according to the embodiment of the invention.
Fig. 15 illustrates a third exemplary screen showing a connection test result according to the embodiment of the invention.
Fig. 16 is a flowchart showing a data transmission process according to the embodiment of the invention.
Figs. 17A-17D illustrate screens shown on a display panel according to the embodiment of the invention.
Fig. 18 illustrates a fourth exemplary screen showing a connection test result according to the embodiment of the invention.

### Detailed Description

Hereinafter, referring to accompanying drawings, embodiments of the present invention will be described. A data transmission apparatus according to aspects of the present invention includes an MFP in which a plurality of functions such as a facsimile transmission/reproduction function, an e-mail transmission function, a printing function, a scanning function, and a copying function are integrated into one. In the embodiments described below, a data transmission system wherein the MFP as a data transmission apparatus as well as a terminal device is provided in a network will be explained.

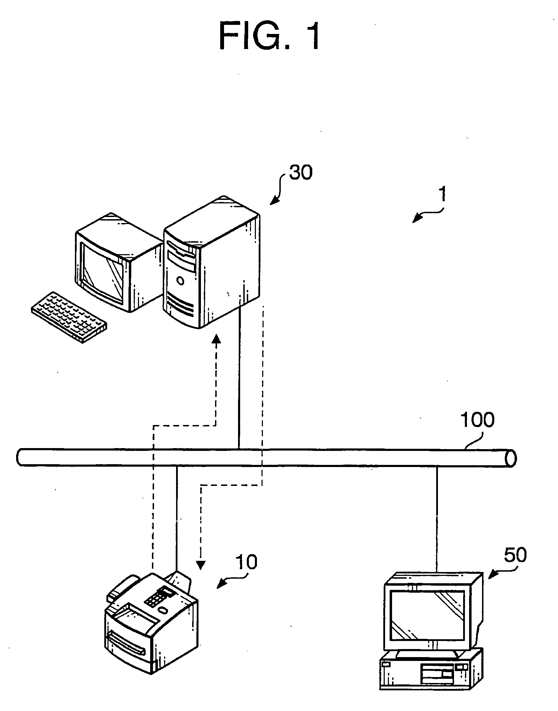

Fig. 1 is a schematic diagram showing a configuration of a data transmission system 1 according to an embodiment of the present invention In the data transmission system 1 shown in Fig. 1, an MFP 10 and a terminal device 50 are connected to the directory server 30 (e.g., an LDAP (Lightweight Directory Access Protocol) server) in which entry information including destination information is stored through a wired communication network 100. In the wired communication network 100, any one of various cables including a serial communication cable, a parallel communication cable, and a LAN cable may be used. In the present embodiment, the LAN cable is used in the wired communication network 100.

Alternatively, a portable terminal device can be connected through a wireless communication network in place of the terminal device 50. For the wireless communication network, any one of a wireless LAN, an IEEE 802.11x, and a Bluetooth (registered trademark) may be used.

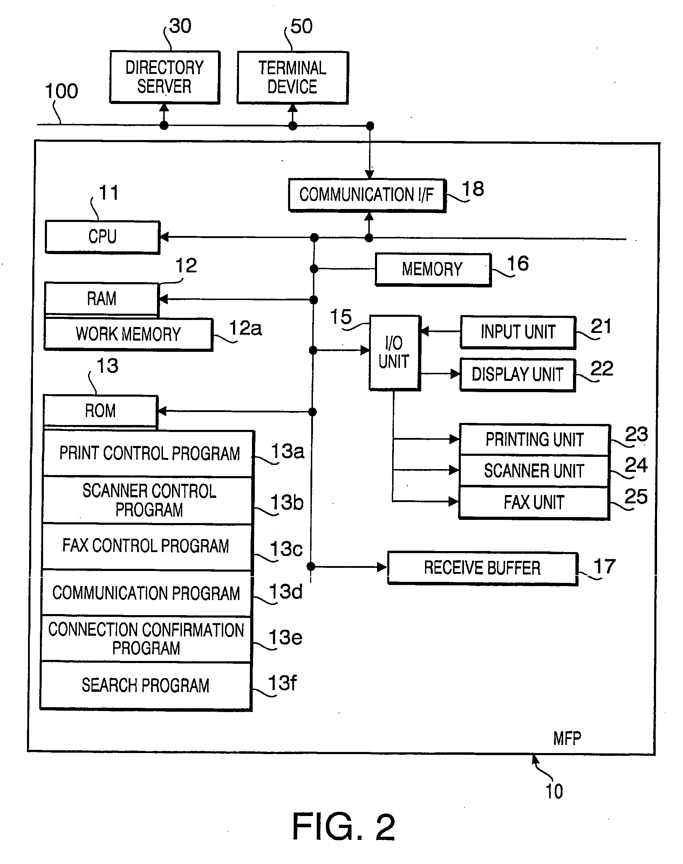

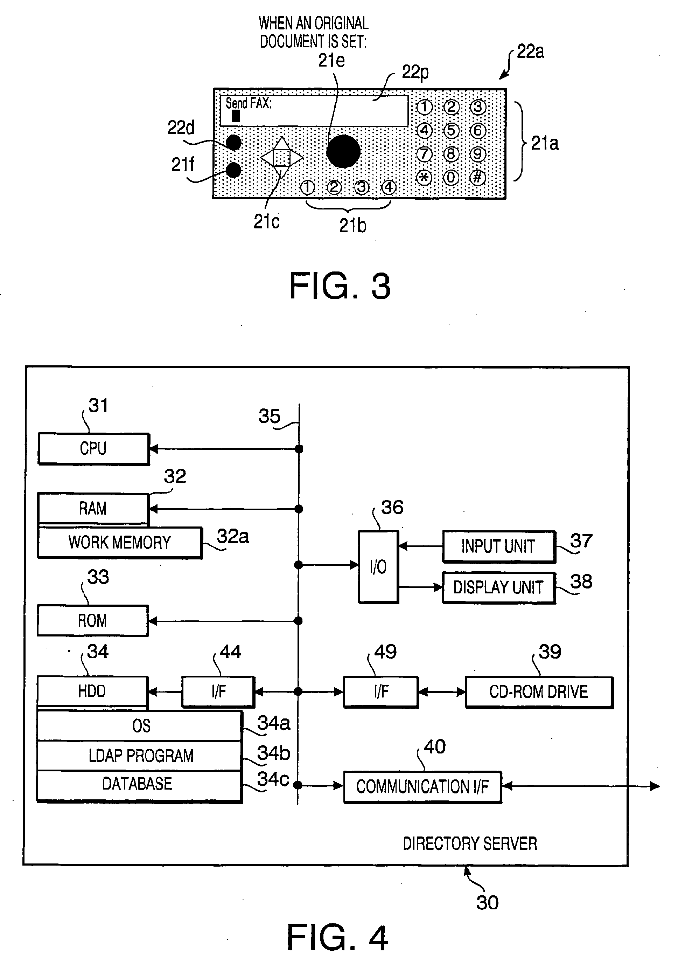

Fig. 2 is a block diagram showing an electrical configuration of the MFP 10 according to the embodiment of the invention. The MFP 10 comprises a CPU 11, a RAM 12 having a work memory 12a, a ROM 13 storing various programs, a bus line 14, an I/O (input/output) unit 15, a nonvolatile memory 16 (e.g., an EEPROM), a two-way communication I/F (interface) 18, which is connected to the wired communication network 100 for sending and receiving data to and from the directory server 30 and the terminal device 50, and a receive buffer memory 17 (hereinafter, referred to as the "receive buffer 17") in which received print control data is temporarily stored. The I/O unit 15 is connected with an input unit 21 having a touch panel (not shown), push-button switches (see Fig. 3), a numerical keypad (see Fig. 3) and the like, a display unit 22 having an LCD (liquid crystal display) (see Fig. 3), and a printing unit 23 having a printing mechanism such as a known ink-jet printing mechanism, a laser printing mechanism, a thermal transfer printing mechanism, and a dot impact printing mechanism. A communication I/F 18 is an interface for wired communication and is connected to the wired communication network 100. A print control program 13a, a scanner control program 13b, a facsimile control program 13c, a communication program 13d, a connection confirmation program 13e and a search program 13f are stored in the ROM 13.

Fig. 3 illustrates an operation panel 22a of the input unit 21 and the display unit 22 according to the embodiment of the present invention. The operation panel 22a comprises a display panel 22p, input buttons 21a, one-touch dial buttons 21b, selection buttons 21c, an Enter button 21d, a transmission start button 21e, and a designation button 21f.

With the operation panel 22a, a user can enter a number sequence such as a telephone number through the input buttons 21a. The operation panel 22a is provided with the one-touch dial buttons 21b having push-buttons, with numeric symbols for example from 1 to 4. Each one-touch dial button 21b is provided with a numeric symbol and can be assigned information such as a telephone number, a facsimile number, an e-mail address, and a folder name. With the one-touch dial buttons 21b, the user can select the corresponding information assigned to the one-touch dial buttons 21b simply by specifying the one-touch dial buttons 21b with the corresponding numeric symbols. Therefore, the user can communicate with a specified destination by one-push of one of the one-touch dial buttons 21b.

Further, the operation panel 22a is provided with the designation button 21f, which is used when one of speed-dials is specified. The speed-dials, which are for example two digit numbers from 10 to 99, are registered in association with information such as telephone numbers, facsimile numbers, and e-mail addresses. When the speed-dial is used, one of the two digit numbers corresponding to a desired information is specified in combination with the designation button 21f. Thus, the speed-dial allows the user to select the information assigned to the corresponding two digit number simply by specifying the corresponding number and the designation button 21f.

The display panel 22p is designed to display for example numbers inputted through the input buttons 21a in an LCD. When a selection is made from a menu displayed on the display panel 22p by operating the selection buttons 21c and the Enter button 21d, data transmission can be executed by the transmission Start button 21e.

In the present embodiment, as shown in Fig. 2, the MFP 10 is configured to have the printing unit 23, a scanner unit 24 for copying and image scanning, and a facsimile unit 25, which are connected to the I/O unit 15 to be controlled by the CPU 11. The operation of the printing unit 23, the scanner unit 24, and the facsimile unit 25 is conducted in a known manner, and the corresponding control programs, i.e., the print control program 13a, the scanner control program 13b, and the facsimile control program 13c stored in ROM 13, are controlled operationally by the CPU 11 running the programs on the work memory 12a in the RAM 12.

Further, the MFP 10 comprises an e-mail transmission function for sending and receiving e-mails, which are incorporated with image data for printing, through an external communication network connected to the wired communication network 100. The program to achieve the e-mail transmission function is a known program, and is incorporated in the communication program 13d stored in the ROM 13.

The connection confirmation program 13e is a program for a user to confirm as to whether destination information stored in the directory server 30 can be obtained by the MFP 10.

The search program 13f is a program for the MFP 10 to obtain the destination information, which is stored in the directory server 30, when the MFP 10 transmits data. The destination information is searched for by the CPU11 of the MFP 10 by running the search program 13f.

In the memory 16 of the MFP 10, Telephone directory (a phone book) containing personal names and company names with the destination information such as telephone numbers and e-mail addresses is stored. The information included in the Telephone directory can be searched for by operating the input unit 21 of the MFP 10, and facsimile transmission to these telephone numbers, and the Internet facsimile transmission to the e-mail addresses through a network are available.

Fig. 4 is a block diagram showing an electrical configuration of the directory server 30 according to the embodiment of the invention. The directory server 30 is a computer such as a personal computer and a work station provided with a CPU 31, a RAM 32 having a work memory 32a, a ROM 33 storing various programs, an HDD (hard disk drive) 34 as a storage unit, a bus line 35, an I/O unit 36, a CD-ROM drive 39, a two-way communication I/F 40 which is connected to the wired communication network 100 for sending and receiving data such as print control data. The HDD 34 and the CD-ROM drive 39 are connected to the bus line 35 through the I/Fs 44, 49. An OS (operating system) 34a that is the fundamental software for the directory server 30, an LDAP program 34b that is executed to achieve a function of an LDAP server, a database 43c storing information such as entry information are stored in the HDD 34. An input unit 37 having input devices such as a keyboard and a mouse, and a display unit 38 having an LCD or a CRT (cathode ray tube) are connected to the I/O unit 36.

In the present embodiment, the directory server 30 is configured as an LDAP server which can be accessed by using the LDAP, and the directory server 30 has a database 43c which stores entry information including the destination information. The database 43c stores personal names and entry information that is specific information associated with the personal names (i.e., affiliations, telephone numbers, facsimile numbers, and e-mail addresses)

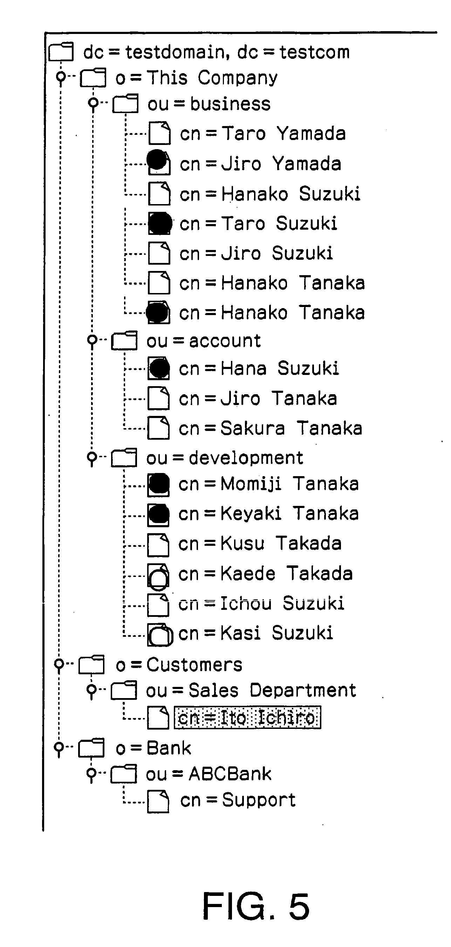

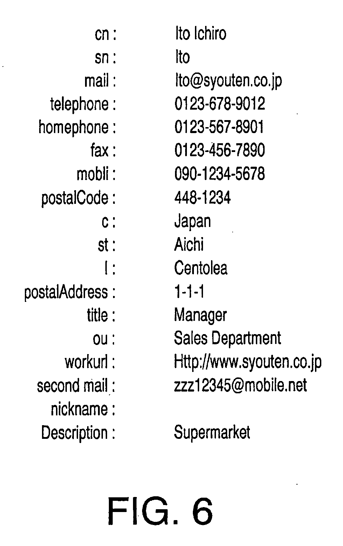

In the directory server 30, persons and organizations are arranged in a hierarchical tree structure, and the information related to each person is stored in the database 43c as individual entry information. Fig. 5 illustrates the hierarchical tree structure in the directory server 30 according to the embodiment of the invention, and Fig. 6 illustrates an example of the entry information stored in the directory server 30 according to the embodiment of the invention. Entry information includes attributes such as "c" (country), "dc" (domain component), "o" (organization), "ou" (organization unit), "cn" (common name), "sn" (surname), "mail" (e-mail address), "telephone" (telephone number) and "fax" (facsimile number). As shown in Fig. 5, each entry information is hierarchized.

Various requests and responses are exchanged repeatedly between the directory server 30 and the MFP 10 as an LDAP client. For example, when a "search" is requested from the MFP 10 to the directory server 30, the directory server 30 returns "search result" to the MFP 10. By using this function, a search request for the entry information including the destination information (for example the facsimile phone numbers and e-mail addresses) is issued from the MFP 10 to the directory server 30, thus, data transmission such as facsimile transmission, Internet facsimile transmission, and e-mail transmission according to the search results can be executed.

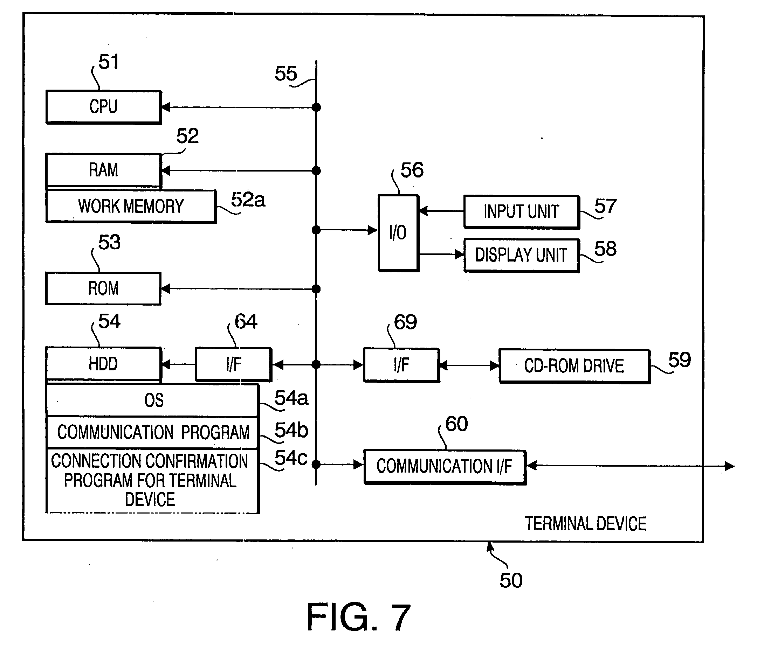

Fig. 7 is a block diagram showing an electrical configuration of the terminal device 50 according to the embodiment of the invention. The terminal device 50 is a computer such as a personal computer and a work station provided with a CPU 51, a RAM 52 having a work memory 52a, a ROM 53 storing various programs, an HDD 54 as a storage unit, a bus line 55, an I/O unit 56, a CD-ROM drive 59, a two-way communication I/F 60 which is connected to the wired communication network 100 for sending and receiving data such as print control data. The HDD 54 and the CD-ROM drive 59 are connected to the bus line 55 through the I/Fs 64, 69. An OS 54a that is the fundamental software for the terminal device 50, a communication program 54b which is used for confirming connection with the directory server 30 are stored in the HDD 34. An input unit 57 having input devices such as a keyboard and a mouse, and a display unit 58 having an LCD or a CRT (cathode ray tube) are connected to the I/O unit 56.

As previously mentioned, the terminal device 50 is connected to the wired communication network 100 so that the user of the terminal device 50 can operate the MFP 10 and the directory server 30 which are also connected to the wired communication network 100. The connection confirmation program 13e stored in the ROM 13 of the MFP 10 is executed by the CPU 11 when the user inputs a predetermined operation to the terminal device 50. Further, the facsimile control program 13c and the search program 13f stored in the ROM 13 of the MFP 10 are executed by the CPU 11 of the MFP 10.

The communication program 54b initially stored in a recording medium such as a CD-ROM (not shown) to be distributed is read by the CD-ROM drive 59 to be installed in the HDD 54 of the terminal device. Alternatively, the communication program54b may be obtained to be installed in the HDD 54 through the wired communication network 100.

In the present embodiment, as the communication program 54b stored in the HDD 54 is executed, communication between the terminal device 50 and the MFP 10 is established. Further, as the connection confirmation program 13e is executed, connection between the MFP 10 and the directory server 30 can be confirmed.

Hereinafter, a connection confirming process executed in the connection confirmation program 13e will be described.

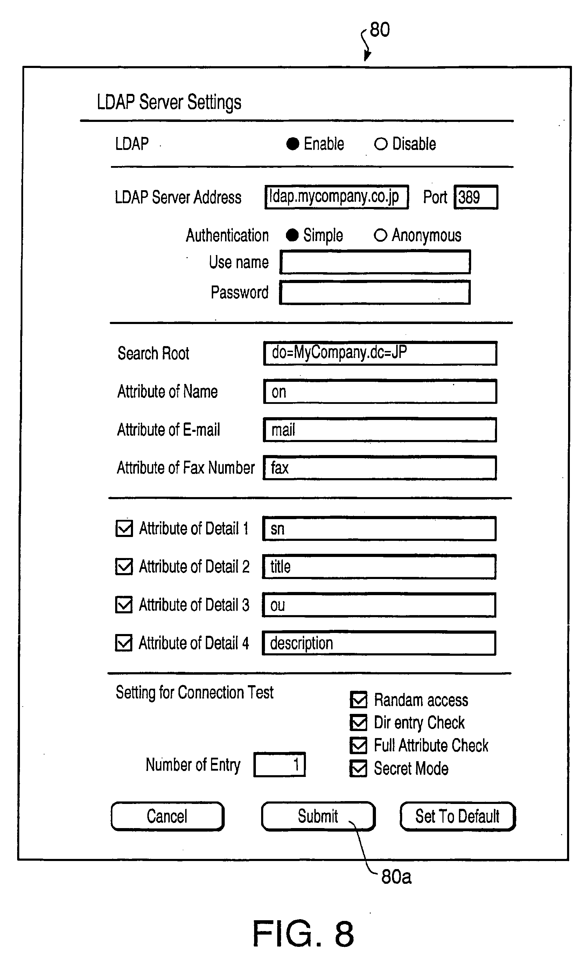

Fig. 8 illustrates a connection setting screen 80 wherein a configuration of the directory server 30 is set according to the embodiment of the invention. As a predetermined operation is inputted to the terminal device 50 by the user, the connection confirmation program 13e is executed in the MFP 10, and communication between the MFP 10 and the terminal device 50 is established. Thereafter, the connection setting screen 80 is displayed in the display unit 58 of the terminal device 50.

In an "LDAP Server Address" field in the connection setting screen 80, an address that indicates the directory server 30 as the LDAP server to be used by the MFP 10 is specified. In a "Search Root" field, a directory in the directory server 30 to be searched is specified. Further, in an "Attribute of Detail" field, an attribute of information to be obtained by the search is specified. In other words, the information specified in the "Attribute of Detail " field is displayed in the display unit 58 of the terminal device 50 as a search result. Furthermore, criteria for confirming connection are set in "Setting for Connection Test". More specifically, when a checkmark is placed in a "Random access" check box, entry information in the directory specified as above in "Search Root" field is randomly searched. When a checkmark is placed in a "Directory Check" check box, entry information is searched for on a directory basis over a plurality of directories. Further, when a checkmark is placed in a "Full Attribute Check" check box, an entire entry information is displayed in the display unit 58 of the terminal device 50 as a search result. When a checkmark is placed in a "Secret Mode" check box, entry information corresponding to the search criteria is searched for and a predetermined part of the search result is prevented from being displayed. A field indicated as "Number of Entry" refers to a number of entries to be displayed in a screen that displays a search result.

As the search criteria are set in the connection setting screen 80 as described above, and when "Submit" button 80a is pressed, the connection confirming process is started.

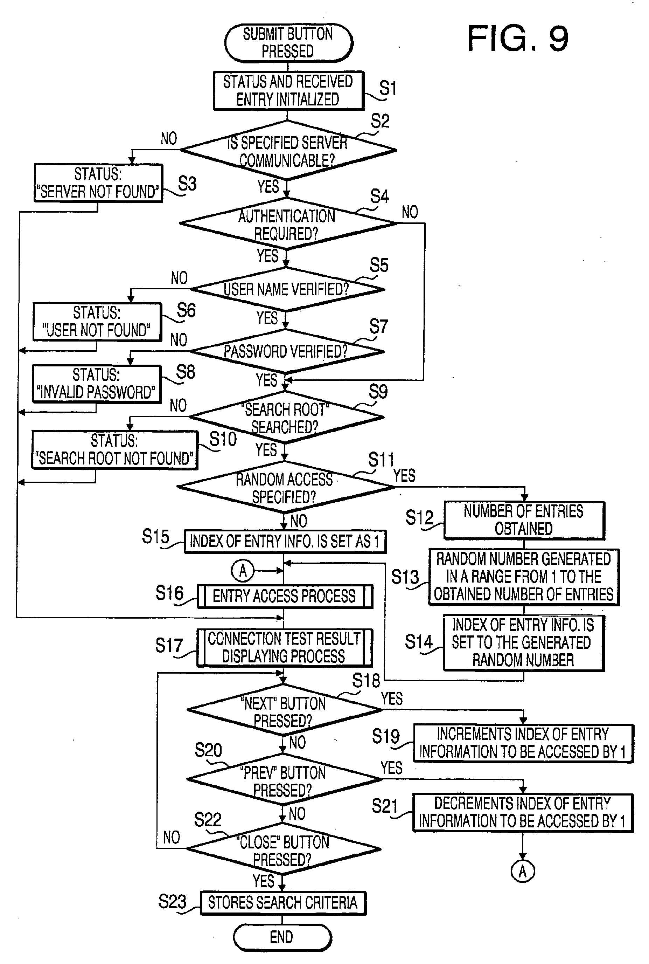

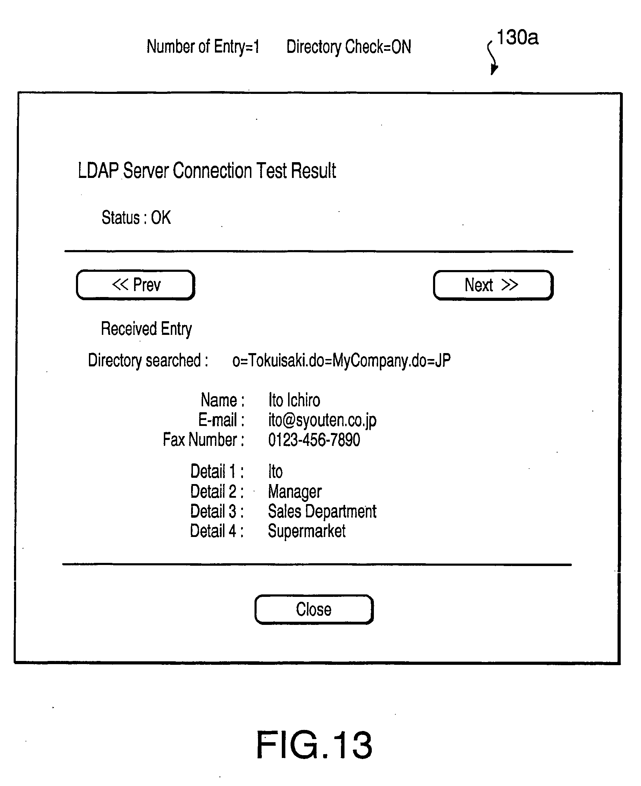

Hereinafter, referring to Fig. 9, the connection confirming process will be described. Fig. 9 is a flowchart showing the connection confirming process according to the embodiment of the invention. As the "Submit" button 80a in the connection setting screen 80 is pressed (see Fig. 8), in S1, the CPU 11 of the MFP 10 initializes status of an LDAP Server Connection Test and information as received entry (see Fig. 13) stored in the work memory 13a. Next, in S2, the CPU 11 examines as to whether communication between the directory server 30 as specified in the "LDAP Server Address" in the connection setting screen 80 is available. When the directory server 30 is not available (S2: NO), in S3, the status of the LDAP Server Connection Test is set to "Server Not Found". When communication between the specified directory server 30 is available (S2: YES), in S4, the CPU 11 examines as to whether authentication of the user of the MFP 10 to be connected with the directory server 30 is required. When no authentication is required (S4: NO), the process proceeds to S9.

When authentication is required (S4: YES), in S5, the CPU 11 examines as to whether the user name is verified by the directory server 30. When the user name is not verified by the directory server 30 (S5: NO), in S6, the status of the LDAP Server Connection Test is set as "User Not Found".

When the user name is verified by the directory server 30 (S5: YES), in S7, the CPU 11 examines as to whether a password corresponding to the user name is verified by the directory server 30. When the password is not verified by the directory server 30 (S7: NO), in S8, the status of the LDAP Server Connection Test is set as "Invalid Password".

When the password is verified by the directory server 30 (S7: YES), and when no authentication is required (S4: NO), in S9, the CPU 11 examines as to whether the directory specified in the "Search Root" field specified in the connection setting screen 80 is successfully searched. When the search in the directory specified in the "Search Root" field fails (S9: NO), in S10, the status of the LDAP Server Connection Test is set as "Search Root Not Found".

When the directory specified in the "Search Root" field is successfully searched (S9: YES), in S11, the CPU 11 examines as to whether a checkmark is placed in the "Random access" check box. When the checkmark is placed and random access is specified (S11: YES), in S12, the CPU 11 obtains a number of entries in the specified directory. It should be noted that the number of entries refers to a number of pieces of entry information stored in the specified directory in the database 34c of the directory server 30. Next, in S13, the CPU 11 generates a random number that falls in a range from 1 to the number of entries obtained in S12. Thus, entry information corresponding to the generated random number, which is to be obtained as the search result is randomly determined. Next, in S14, the CPU 11 sets an index of the entry information to be accessed is set to the generated random number.

In S11, when no checkmark is placed in the "Random access" check box, and no random access is specified (S11: NO), in S15, the CPU 11 sets an index of entry information to be accessed in the database 34c in the directory server 30 as "1".

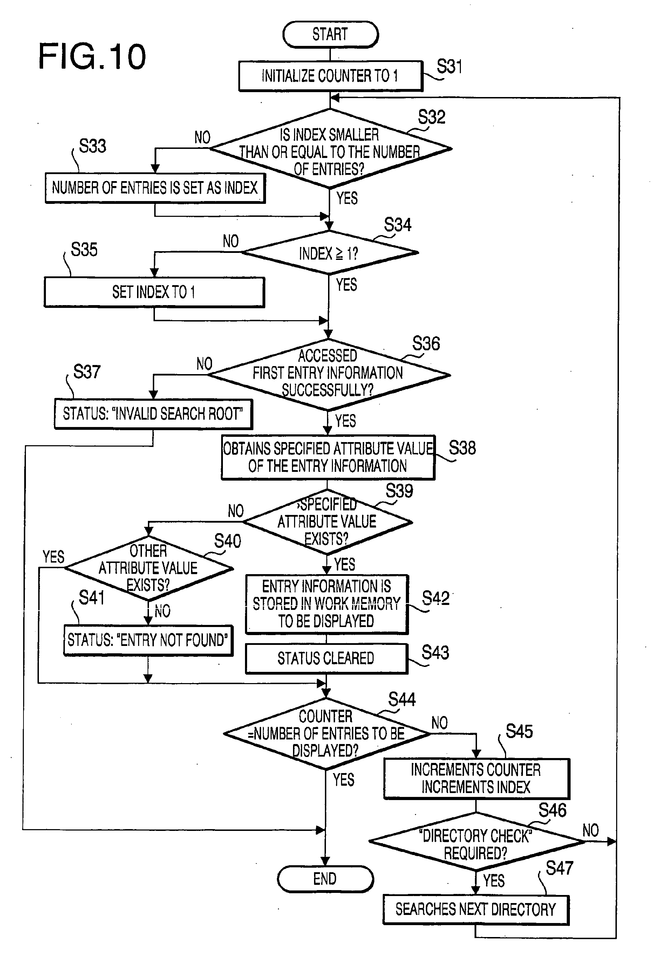

Next, in S16, the CPU 11 accesses the entry information corresponding to the index specified by the number (i.e., either 1 or the generated random number) stored in the database 34c of the directory server 30 and executes an "entry access process", which will be described hereinafter referring to Fig. 10.

Fig. 10 is a flowchart showing the entry access process according to the embodiment of the invention. As the entry access process is started, in S31, the CPU 11 of the MFP 10 initializes a counter provided in the work memory 12a to 1. Next, in S32, the CPU 11 examines as to whether the index set in the previous step (i.e., either S15 or S14) is smaller than or equal to the number of entries stored in the database 34c of the directory server 30. When the index is greater than the number of entries stored in the database 34c (S32: NO), in S33, the number of entries is set as the index. Next, in S34, the CPU 11 examines as to whether the index is greater than or equal to 1. When the index is smaller than 1 (S34: NO), in S35, the CPU 11 sets the index to 1. Thus, the index is set within a range from 1 to the number of entries.

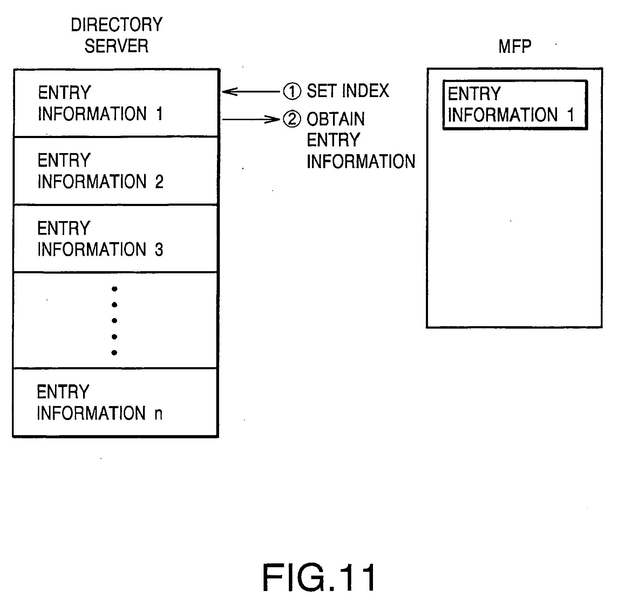

Next, in S36, the CPU 11 accesses the entry information stored in the database 34c of the directory server 30 with the index set in the previous step (i.e., either S34 or S35). Fig. 11 is an exemplary diagram to illustrate the directory server 30 and the MFP 10 obtaining the entry information according to the embodiment of the invention. In Fig. 11, it is assumed that the index is set to 1, and the CPU 11 of the MFP 10 accesses first entry information stored in a first place in the database 34c of the directory server 30. When the CPU 11 fails in accessing the first entry information (S36: NO), in S37, the CPU 11 sets the status of the LDAP Server Connection Test is set as "Invalid Search Root". When the CPU 11 successfully accesses the first entry information (S36: YES), in S38, the CPU 11 obtains a specified attribute value of the first entry information. It should be noted that the specified attribute value refers to an item specified in the "Attribute of Detail" field to be obtained by the search in the connection setting screen 80 (see Fig. 8).

Next, in S39, the CPU 11 examines as to whether the specified attribute value exists in the database 34c of the directory server 30. When the specified attribute value does not exist (S39: NO), in S40, the CPU 11 examines as to whether the first entry information includes any other attribute value that is not specified. When the specified attribute value does not exist but the first entry information includes other data than the specified attribute value (S40: YES), the process proceeds to S44. When the specified attribute value does not exist and no other data exists in the first entry information (S40: NO), in S41, the CPU 11 sets the status of the LDAP Server Connection Test is set as "Entry Not Found" and proceeds to S44.

In S39, when the specified attribute value is found in the entry information with the set index (S39: YES), in S42, the CPU 11 stores the entry information in the work memory 12a as information to be displayed. Thereafter, in S43, the status the LDAP Server Connection Test is cleared.

In S44, the CPU 11 examines as to whether the value indicated in the counter provided in the work memory 12a corresponds to the number of entries to be displayed specified in the "Number of Entry" field in the connection setting screen 80 (see Fig. 8). When the value in the counter corresponds to the number of entries to be displayed (S44: YES), the CPU 11 terminates the entry access process.

When the value in the counter does not correspond to the number of entries to be displayed (S44: NO), in S45, the CPU 11 increments the value in the counter and the index by 1. Next, in S46, the CPU 11 examines as to whether the entry information should be searched for on a directory basis over a plurality of directories (i.e., whether a checkmark is placed in "Directory Check" check box in the connection setting screen 80). When a checkmark is not placed (S46: NO), the process returns to S32. When a checkmark is placed and search on a directory basis over a plurality of directories is required (S46: YES), in S47, the CPU 11 searches a next directory for the entry information. The process thereafter returns to S32 and repeats the steps following S32 until the value in the counter is incremented to correspond to the number of entries to be displayed. In S44, when the CPU 11 obtains the number of pieces of entry information (S44: YES), the entry access process is terminated, and the process returns to S16 in Fig. 9. In the connection confirming process, the process proceeds to S17, wherein a connection test result displaying process is executed.

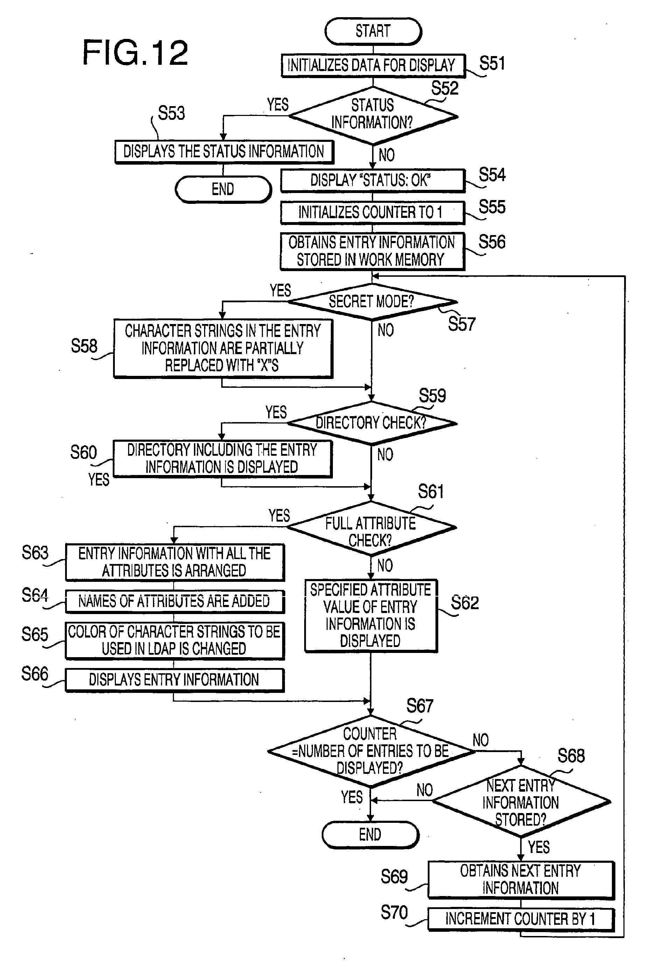

Hereinafter, referring to Fig. 12, the connection test result displaying process will be described. Fig. 12 is a flowchart showing the connection test result displaying process according to the embodiment of the invention. As the connection test result displaying process is started, in S51, the CPU 11 of the MFP 10 initializes data to be displayed, which is stored in a predetermined area such as the work area 12a of the RAM 12 of the MFP 10. Next, in S52, the CPU 11 examines as to whether information regarding the status of the LDAP Server Connection Test is set in any of S3, S6, S8, S10 (see Fig. 9), S37 and S41 (see Fig. 10). When the CPU 11 judges that the status information is set (S52: YES), in S53, the status information is displayed in the display unit 58 of the terminal device 50. With the status information displayed, failure in obtaining the entry information is notified to the user. In the present embodiment, it is notified to the user that the entry information stored in the directory server 30 cannot be accessed by the MFP 10.

When no status information is set (S52: NO), in S54, the CPU 11 displays information indicating the entry information is available (for example, "Status: OK") and in S55, initializes the value in the counter to 1. Next, in S56, the CPU 11 obtains the first entry information stored in the work memory 12a of the RAM 12 of the MFP 10 as the data to be displayed.

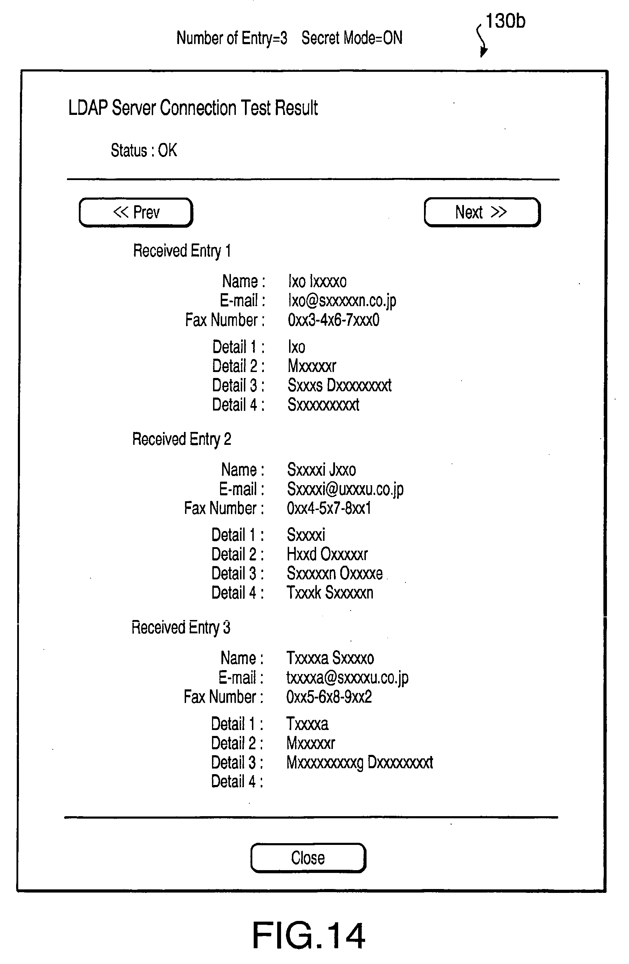

Next, in S57, the CPU 11 examines as to whether a checkmark is placed in the "Secret Mode" check box in the connection setting screen 80 (see Fig. 8). When a checkmark is placed (S57: YES), in S58, a part of a character string contained in the entry information stored in the work memory 12a is replaced with a predetermined character (for example, an "x") so that only a part of the character string is displayed as the connection test result. In the present embodiment, characters in a character string excluding an initial character and a last character are replaced with "x"s (see Fig. 14), so that the entire character string are not recognized by the user and the user should not know the content of the entry information including personal information and a password when the connection test is conducted in the Secret Mode.

Next, in S59, the CPU 11 examines as to whether a checkmark is placed in the "Directory Check" check box in the connection setting screen 80. When a checkmark is placed (S59: YES), in S60, information indicating the directory wherein the entry information is found is displayed on the display unit 58 of the terminal device 50

Next, in S61, the CPU 11 of the MFP 10 examines as to whether a checkmark is placed in the "Full Attribute Check" check box in the connection setting screen 80. When no checkmark is placed (S61: NO), in S62, the specified attribute value of the entry information is displayed on the display unit 58 of the terminal device 50, as shown in Fig. 13. Fig. 13 illustrates an LDAP server connection test result screen 130a shown on the display unit 58 of the terminal device 50 as a connection test result according to the embodiment of the invention. The result screen 130a shown in Fig. 13 is displayed as an LDAP server connection test result when the "Number of Entry" is set to 1 and the "Directory Check" is set on (i.e., a checkmark is placed in the "Directory Check" check box in the connection setting screen 80). It should be noted that in the result screen 130a, the directory including the entry information found is displayed. Further, Fig. 14 illustrates an LDAP server connection test result screen 130b shown on the display unit 58 of the terminal device 50 as a connection test result according to the embodiment of the invention. The result screen 130b shown in Fig. 14 is displayed as an LDAP server connection test result when the "Number of Entry " is set to 3 and the "Secret Mode" is set on (i.e., a checkmark is placed in the "Secret Mode" check box in the connection setting screen 80). In the result screen 130b, a part of the character strings indicating the entry information found is replaced with "x"s so that the entire character string cannot be recognized by the user. Thus, information that may be confidential can be protected from being undesirably leaked.

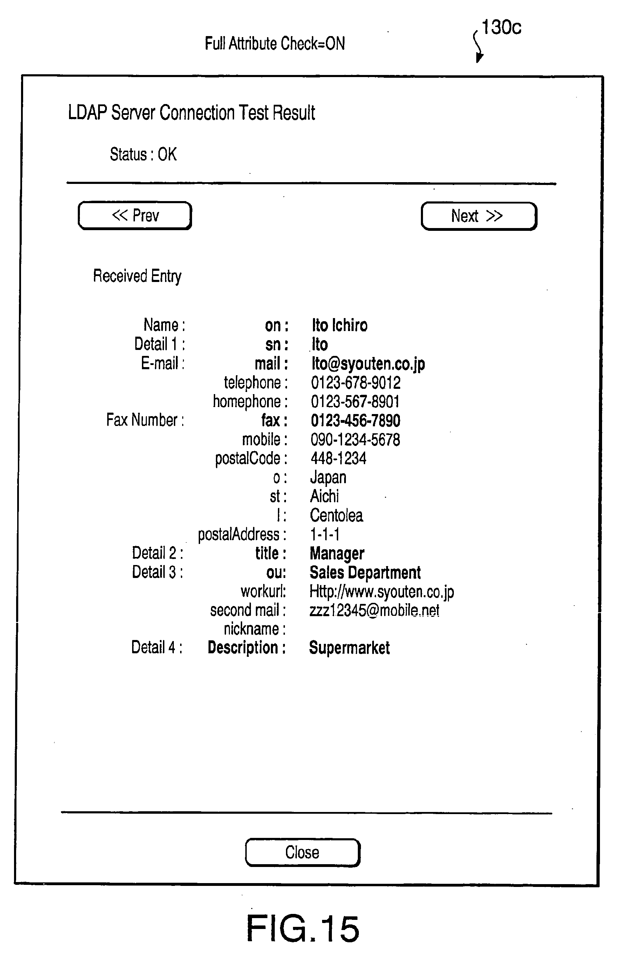

In S61, when a checkmark is placed in the "Full Attribute Check" check box in the connection setting screen 80 (S61: YES), in S63, the entry information with all the attributes included therein is set to be displayed in the work memory 12a of the RAM 12 of the MFP 10 as the data to be displayed. Next, in S64, names of the attributes to be used in LDAP are added to the entry information with the attributes. Next, in S65, a color of the character strings indicating the attributes to be used in LDAP and to be shown in the display unit 58 of the terminal device 50 is changed in a different form (for example, in red) than a form of the character strings indicating the attributes that are not to be used in LDAP. Next, in S66, the CPU 11 displays the entry information with the attributes on the display unit 58 of the terminal device 50 with the character strings of the attributes to be used in LDAP displayed in the different form. Fig. 15 illustrates an LDAP server connection test result screen 130c shown on the display unit 58 of the terminal device 50 as a connection test result according to the embodiment of the invention. It should be noted that the character strings indicating the attributes to be used in LDAP are displayed in bold face so that the character strings indicating the attributes to be used in LDAP can be easily distinguished by the user. It should be further noted that the character strings indicating the attributes to be used in LDAP may not be necessarily distinguished by being displayed in bold face, but may be distinguished by being displayed in a different color, such as in red.

Next, in S67, the CPU 11 of the MFP 10 examines as to whether the value indicated in the counter provided in the work memory 12a corresponds to the number of entries to be displayed specified in the "Number of Entry" field in the connection setting screen 80 (see Fig. 8).

When the value indicated in the counter does not correspond to the number of entries to be displayed (S67: NO), in S68, the CPU 11 examines as to whether next entry information is stored in the work memory 12a. When no next entry information is stored (S68: NO), the connection test result displaying process is terminated. When next entry information is stored (S68: YES), in S69, the CPU 11 obtains the stored entry information and in S70, increments the counter by 1. Thereafter, the process returns to S57, and the CPU 11 displays the next entry information in either S62 or S66. The process thereafter returns to S17 shown in Fig. 9.

In S17, as the connection test result displaying process is terminated, in S18, the CPU 11 of the MFP 10 examines as to whether a "Next" button shown in the result screen 130a, 130b, 130c is pressed by the user. "When the "Next" button is pressed (S18: YES), in S19, the CPU 11 increments the index of entry information to be accessed in the database 34c in the directory server 30 by 1. The "Next" button is provided for an operation to display the next entry information corresponding to the incremented index. The process thereafter returns to S16, wherein the entry access process is repeated, and to S17, wherein the connection test result displaying process is repeated.

When the "Next" button is not pressed (S18: NO), and in S20, a "Prev" button shown in the result screen 130a, 130b, 130c is pressed by the user (S20: YES), in S21, the CPU 11 decrements the index of entry information to be accessed in the database 34c in the directory server 30 by 1. The "Prev" button is provided for an operation to display the previous entry information corresponding to the decremented index. The process thereafter returns to S16, wherein the entry access process is repeated, and to S17, wherein the connection test result displaying process is repeated.

When the "Prev" button is not pressed (S20: NO), in S22, the CPU 11 examines as to whether a "Close" button shown in the result screen 130a, 130b, 130c is pressed by the user. The "Close" button is provided for an operation to close the result screen 130a, 130b, 130c. When the "Close" button is not pressed (S22: NO), the process returns to S18. When the "Close" button is pressed (S22: YES), in S23, the search criteria (see Fig. 8) is stored in the memory 16. The process is terminated thereafter.

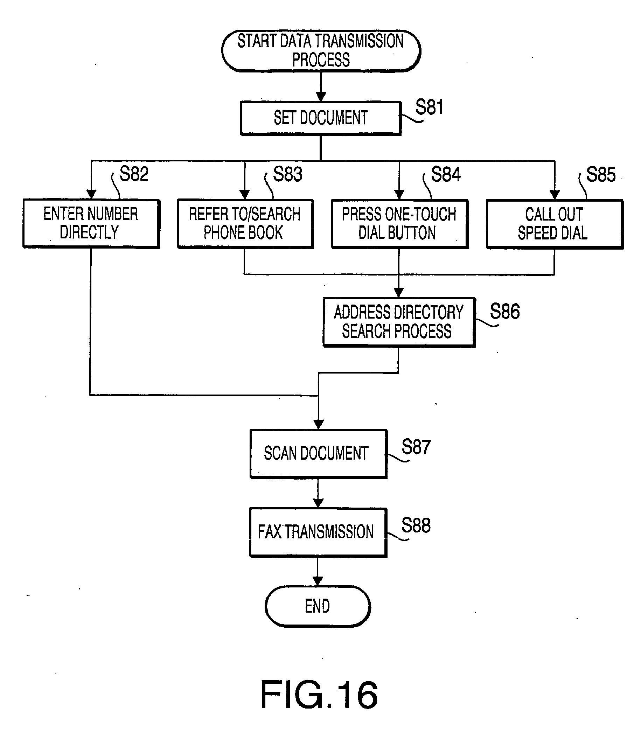

Referring to Fig. 16, a process to be executed in a data transmission is explained hereinbelow. Fig. 16 is a flow chart showing the data transmission process according to the embodiment of the invention. In S81, the user sets a document that contains data to be transmitted to the MFP 10. Thereafter, the user executes one of the following four operations described in S82 through S85. In S82, the user enters a destination telephone number directly by manipulating the operation buttons of MP10. In S83, the user refers to the registered phone book to search the destination information. In S84, the user presses one of the one-touch dial buttons 21b of the MFP 10. In S85, the user uses the speed-dial of the MFP 10.

When S82 is selected, in S87, the MFP 10 scans the document, and executes a conventional FAX transmission process in S88. Thus, the data is transmitted from the MFP 10. In this case, no entry information in the directory server 30 is searched for.

When S83, S84, or S85 is selected, in S86, the MFP 10 executes an Address directory search process, wherein the entry information registered in the directory server 30 or the Telephone directory registered in the directory server 30 is searched for. Thus, search for a facsimile number for facsimile transmission and search for an e-mail address for Internet facsimile transmission are executed.

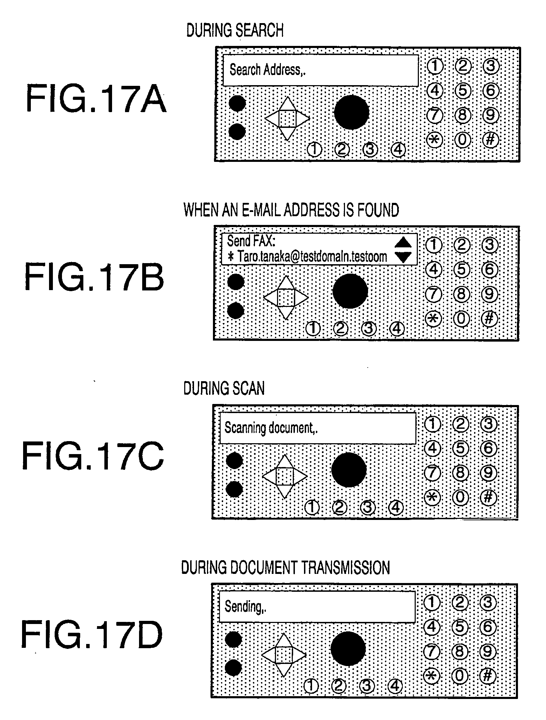

Figs. 17A-17D illustrate screens shown on the display panel 22p according to the embodiment of the invention. Fig. 17A is a screen shown when the entry information and the address directory registered in the MFP 10 are searched for. Fig. 17B is a screen showing an e-mail address.

When a desired destination information is retrieved, the MFP 10 scans documents (see Fig. 13C and S87 in Fig. 16) and runs the facsimile control program 13c and the communication program 13d to execute facsimile transmission and Internet facsimile transmission (see Fig. 17D and S88 in Fig. 16). When a plurality of destinations are searched for, the desired destination information corresponding to the destinations is extracted by an operation from the user to the input unit 21 of the MFP 10.

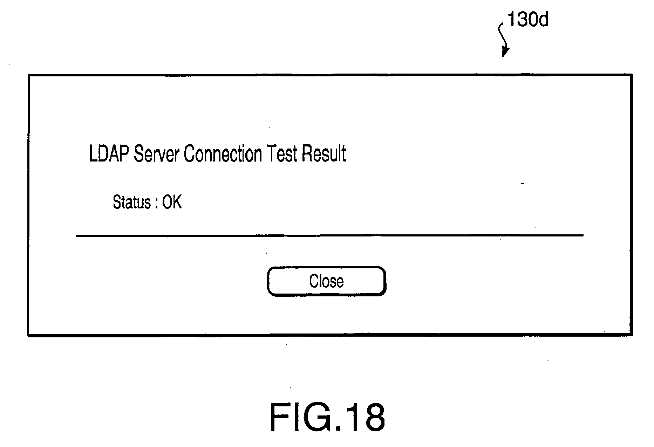

It should be noted that, in the present embodiment, the MFP 10 is configured to obtain the entry information to display the same. However the entry information may not be necessarily displayed in the display unit 58 of the terminal device 50, but a notification to notify the user as to whether the entry information is successfully obtained may be displayed. Fig. 18 illustrates an exemplary screen showing an LDAP server connection test result screen 130d shown on the display unit 58 of the terminal device 50 as a connection test result according to the embodiment of the invention. In the result screen 130d, character strings to indicate the entry information is successfully obtained (for example, "Status: OK") is displayed so that the user can be notified of the obtaining status of the entry information.

As described above, according to the present embodiment, in the data transmission system 1 having the MFP 10 as the data transmission apparatus and the directory server 30, the user can check as to whether the entry information including the destination information stored in the directory server 30 can be obtained before the user actually transmits data through the terminal device 50. In other words, the user can confirm as to whether the data transmission apparatus such as the MFP 10 can obtain the data from the directory server 30.

Although examples of carrying out the invention have been described, those skilled in the art will appreciate that there are numerous variations and permutations of the data transmission system, data transmission method, data transmission apparatus and program therefor that fall within the spirit and scope of the invention as set forth in the appended claims. It is to be understood that the subject matter defined in the appended claims is not necessarily limited to the specific features or act described above. Rather, the specific features and acts described above are disclosed as example forms of implementing the claims.

In the present embodiment described above, as the connection confirmation program 13e is executed in the MFP 10, and the LDAP server connection test result screen 130a, 130b, 130c, 130d generated in the connection confirmation program 13e is displayed on the display unit 58 of the terminal device 50. Thus, even when a plurality of MFPs 10 exist in the data transmission system 1, the user can set the search criteria in a desired MFP 10 through the terminal device 50 that the user is currently operating. Further, as a connection confirmation program 54e for a terminal device (see Fig. 7), which executes a connection confirming process corresponding to the connection confirmation program 13e, is stored in the HDD 54 of the terminal device 50, a connection test result screen generated in the connection confirming program 54c for a terminal device can be similarly displayed in the display unit 58 of the terminal device so that the user can operate the terminal device 50 through the input unit 57 to execute the connection confirmation process by running the connection confirming program 54c for a terminal device.

Further, in the present embodiment described above, as the connection confirming program 13e of the MFP 10 is executed and connection between the MFP 10 and the directory server 30 is confirmed, so that the user can confirm as to whether the search result obtained by the MFP 10 is adequate. It should be noted that the connection test result screen 130a, 130b, 130c, 130d generated in the connection confirmation program 13e can be displayed in the display unit 22 of the MFP 10 and the user can run the connection confirming program 13e by operating the input unit 21 of the MFP 10, the connection confirming process can be similarly executed.

Furthermore, it should be noted that the search criteria stored in the memory 16 may be stored in the other storing unit such as in the RAM 32 and other memory unit that can be accessed by the MFP 10. However, in the present embodiment described above, the search criteria are stored in the memory 16, so that the once stored criteria can remain therein even when the MFP 10 is reset.

Further, the search criteria in the above-described embodiment are stored in the memory 16 when the "Close" button shown in the result screen 130a, 130b, 130c, 130d is pressed. In addition to the "Close" button, a "Cancel" button may be provided, so that the search criteria may not be stored in the memory 16 when the "Cancel" button is pressed by the user.

## Claims

1. A data transmission system comprising:
a server storing information including entry information;
a search criterion setting system, wherein a search criterion to search the server for the entry information is set according to an instruction from an input unit;
a preliminary search system, which searches the server for the entry information based on the search criterion set in the search criterion setting system;
a preliminary obtaining system, which obtains a piece of the entry information searched for by the preliminary search system which meets the search criterion from the server;
an entry information notifying system, which notifies a user of the data transmission system of the piece of the entry information obtained by the preliminary obtaining system through a notifying unit;
a search criterion storing system, wherein the search criterion set in the search criterion setting system is stored;
a substantial search system, which searches the server for the entry information based on the search criterion stored in the search criterion storing system according to the instruction from the input unit;
a substantial obtaining system, which obtains a piece of the entry information searched for by the substantial search system which meets the search criterion from the server;
an extracting system, wherein destination information indicating a destination of data transmission is extracted from the piece of the entry information obtained by the substantial obtaining system; and
a data transmitting system, which transmits data to the destination according to the destination information extracted in the extracting system.

2. The data transmission system according to claim 1, wherein the piece of the entry information obtained by the preliminary obtaining system is notified to the user in an unrecognizable format so that a part of the obtained piece of the entry information is unrecognizable to the user.

3. The data transmission system according to claim 1 or claim 2, wherein the entry information notifying system notifies the user of a plurality of pieces of the entry information.

4. The data transmission system according to any one of claim 1 through claim 3, wherein the entry information notifying system randomly selects a piece of the entry information and notifies the user of the selected piece of the entry information.

5. The data transmission system according to any one of claim 1 through claim 4, wherein the entry information notifying system notifies the user of a plurality of pieces of the entry information by displaying the plurality of pieces of the entry information in one screen of a display unit of the notifying unit.

6. The data transmission system according to any one of claim 1 through claim 5, wherein the entry information notifying system notifies the user of the entry information by displaying a piece of the entry information and another piece of the entry information which is displayed according to an instruction from the input unit.

7. The data transmission system according to any one of claim 1 through claim 6, wherein the entry information notifying system notifies the user of a piece of the entry information having attributes specified in the search criterion as well as the other attributes composing the entry information that are not specified in the search criterion.

8. The data transmission system according to any one of claim 1 through claim 7, wherein the entry information notifying system notifies the user of a piece of the entry information having attributes specified in the search criterion by displaying the attributes that meet the search criterion set in the search criterion setting system to be distinguished from the other attributes composing the entry information that are not specified in the search criterion.

9. The data transmission system according to any one of claim 1 through claim 8,
wherein the entry information is stored in a directory configured in a tree structure in the server, and
wherein the entry information notifying system notifies the user of the directory storing the entry information searched for in accordance with the search criterion set in the search criterion setting system.

10. A method for data transmission, comprising:
setting a search criterion to search for entry information including destination information regarding a destination of the data transmission stored in a server according to an instruction from an input unit;
searching preliminarily the server for the entry information based on the set search criterion;
obtaining preliminarily a piece of the entry information searched for by the preliminary search which meets the search criterion from the server;
notifying a user of a notifying unit of the piece of the entry information obtained in the preliminary obtainment through the notifying unit;
storing the set search criterion in a search criterion storing system;
searching substantially the server for the entry information based on the search criterion stored in the search criterion storing system;
obtaining substantially a piece of the entry information searched for by the substantial search which meets the search criterion from the server;
extracting the destination information from the piece of the entry information obtained by the substantial obtainment; and
transmitting data to the destination according to the destination information extracted from the piece of the entry information.

11. A computer usable medium comprising computer readable instructions for controlling a computer to execute steps of:
a search criterion setting step, wherein a search criterion to search for entry information including destination information regarding a destination of the data transmission stored in a server is set according to an instruction from an input unit;
a preliminary searching step, wherein the entry information is searched for in the server based on the search criterion set in the search criterion setting step;
a preliminary obtaining step, wherein a piece of the entry information searched for in the preliminary search step which meets the search criterion is obtained from the server;
an entry information notifying step, wherein a user of the computer is notified of the piece of the entry information obtained in the preliminary obtaining step through a notifying unit;
a search criterion storing step, wherein the search criterion set in the search criterion setting step is stored;
a substantial searching step, wherein the entry information is searched for in the server based on the search criterion stored in the search criterion storing step according to the instruction from the input unit;
a substantial obtaining step, wherein a piece of the entry information searched by the substantial search system that meets the search criterion is obtained from the server;
an extracting step, wherein the destination information is extracted from the piece of the entry information obtained by the substantial obtaining step; and
a data transmission step, wherein data is transmitted to the destination according to the destination information extracted in the extracting system.

12. A data transmission apparatus, comprising:
a search criterion setting system, wherein a search criterion to search for entry information stored in a server is set according to an instruction from an input unit;
a preliminary search system, which searches the server for the entry information based on the search criterion set in the search criterion setting system;
a preliminary obtaining system, which obtains a piece of the entry information searched by the preliminary search system that meets the search criterion from the server;
an entry information notifying system, which notifies a user of the data transmission apparatus of the piece of the entry information obtained by the preliminary obtaining system through a notifying unit;
a search criterion storing system, wherein the search criterion set in the search criterion setting system is stored;
a substantial search system, which searches the server for the entry information based on the search criterion stored in the search criterion storing system according to the instruction from the input unit;
a substantial obtaining system, which obtains a piece of the entry information searched for by the substantial search system which meets the search criterion from the server;
an extracting system, wherein destination information indicating a destination of data transmission is extracted from the piece of the entry information obtained by the substantial obtaining system; and
a data transmitting system, which transmits data to the destination according to the destination information extracted in the extracting system.

13. A data transmission system comprising:
a server to store information including entry information;
a search criterion setting system, wherein a search criterion to search for the entry information stored in the server is set according to an instruction from an input unit;
a preliminary search system, which searches the server for the entry information based on the search criterion set in the search criterion setting system;
a preliminary obtaining system, which obtains a piece of the entry information searched for by the preliminary search system which meets the search criterion from the server;
an obtainment result notifying system, which notifies a user of the data transmission system of as to whether the piece of the entry information is obtained by the preliminary obtaining system through a notifying unit;
a search criterion storing system, wherein the search criterion set in the search criterion setting system is stored;
a substantial search system, which searches the server for the entry information based on the search criterion stored in the search criterion storing system according to the instruction from the input unit;
a substantial obtaining system, which obtains a piece of the entry information searched for by the substantial search system which meets the search criterion from the server;
an extracting system, wherein destination information indicating a destination of data transmission is extracted from the piece of the entry information obtained by the substantial obtaining system; and
a data transmitting system, which transmits data to the destination according to the destination information extracted in the extracting system.

14. A method for data transmission, comprising:
setting a search criterion to search for entry information including destination information regarding a destination of the data transmission stored in a server according to an instruction from an input unit;
searching preliminarily the server for the entry information based on the set search criterion;
obtaining preliminarily a piece of the entry information searched for by the preliminary search which meets the search criterion from the server;
notifying a user of a notifying unit of as to whether the piece of the entry information is obtained in the preliminary obtainment through the notifying unit;
storing the set search criterion in a search criterion storing system;
searching substantially the server for the entry information based on the search criterion stored in the search criterion storing system;
obtaining substantially a piece of the entry information searched for by the substantial search which meets the search criterion from the server;
extracting the destination information from the piece of the entry information obtained by the substantial obtainment; and
transmitting data to the destination according to the destination information extracted from the piece of the entry information.

15. A computer usable medium comprising computer readable instructions for controlling a computer to execute steps of:
a search criterion setting step, wherein a search criterion to search for entry information including destination information regarding a destination of the data transmission stored in a server is set according to an instruction from an input unit;
a preliminary searching step, wherein the entry information is searched for in the server based on the search criterion set in the search criterion setting step;
a preliminary obtaining step, wherein a piece of the entry information searched for in the preliminary search step which meets the search criterion is obtained from the server;
an obtainment result notifying step, wherein a user of the computer is notified of as to whether the piece of the entry information obtained in the preliminary obtaining step through a notifying unit;
a search criterion storing step, wherein the search criterion set in the search criterion setting step is stored;
a substantial searching step, wherein the entry information is searched for in the server based on the search criterion stored in the search criterion storing step according to the instruction from the input unit;
a substantial obtaining step, wherein a piece of the entry information searched for by the substantial search system which meets the search criterion is obtained from the server;
an extracting step, wherein the destination information is extracted from the piece of the entry information obtained by the substantial obtaining step; and
a data transmission step, wherein data is transmitted to the destination according to the destination information extracted in the extracting system.

16. A data transmission apparatus, comprising:
a search criterion setting system, wherein a search criterion to search for entry information stored in a server is set according to an instruction from an input unit;
a preliminary search system, which searches the server for the entry information based on the search criterion set in the search criterion setting system;
a preliminary obtaining system, which obtains a piece of the entry information searched for by the preliminary search system which meets the search criterion from the server;
an obtainment result notifying system, which notifies a user of the data transmission apparatus of as to whether the piece of the entry information obtained by the preliminary obtaining system through a notifying unit;
a search criterion storing system, wherein the search criterion set in the search criterion setting system is stored;
a substantial search system, which searches the server for the entry information based on the search criterion stored in the search criterion storing system according to the instruction from the input unit;
a substantial obtaining system, which obtains a piece of the entry information searched for by the substantial search system which meets the search criterion from the server;
an extracting system, wherein destination information indicating a destination of data transmission is extracted from the piece of the entry information obtained by the substantial obtaining system; and
a data transmitting system, which transmits data to the destination according to the destination information extracted in the extracting system.
